(19) Europäisches Patentamt
European Patent Office
Office européen des brevets

(11) Veröffentlichungsnummer : **0 495 249 B1**

(12) # EUROPÄISCHE PATENTSCHRIFT

(45) Veröffentlichungstag der Patentschrift : **27.07.94 Patentblatt 94/30**

(51) Int. Cl.$^5$ : **C08G 18/20,** // (C08G18/20, 101:00)

(21) Anmeldenummer : **91122365.9**

(22) Anmeldetag : **30.12.91**

(54) **Verwendung von N-(Aminoalkyl)-pyrrolidinen als Katalysator für das Polyisocyanatpolyadditionsverfahren und Verfahren zur Herstellung von Polyurethan(harnstoff)en.**

(30) Priorität : **12.01.91 DE 4100811**

(43) Veröffentlichungstag der Anmeldung : **22.07.92 Patentblatt 92/30**

(45) Bekanntmachung des Hinweises auf die Patenterteilung : **27.07.94 Patentblatt 94/30**

(84) Benannte Vertragsstaaten : **AT BE CH DE ES FR GB IT LI NL SE**

(56) Entgegenhaltungen :
**FR-A- 2 085 965**
**GB-A- 896 437**

(73) Patentinhaber : **BAYER AG**
**D-51368 Leverkusen (DE)**

(72) Erfinder : **Weider, Richard, Dr.**
**Quettinger Strasse 78**
**W-5090 Leverkusen 3 (DE)**
Erfinder : **Scholz, Uwe, Dr.**
**Adreas-Gryphius-Strasse 26**
**W-5000 Köln 80 (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von N-(Aminoalkyl)-pyrrolidinen als Katalysatoren zur Herstellung von Produkten nach dem Polyisocyanatadditionsverfahren. Sie können als Ersatz oder in Kombination mit an sich bekannten Urethankatalysatoren z.B. DABCO zur Herstellung von starren oder flexiblen Polyurethanschäumen sowie zahlreichen anderen Polyurethan-Produkten eingesetzt werden. Unter dem obengenannten Begriff "Polyurethan-Produkte" sollen im folgenden alle Umsetzungsprodukte von Polyisocyanaten mit Verbindungen mit mindestens 2 gegenüber Isocyanaten reaktionsfähigen Wasserstoffatomen gemeint sein, d.h. unter dem hier verwendeten Begriff Polyurethan sind beispielsweise reine Polyurethane, Polyurethan-polyharnstoffe oder reine Polyharnstoffe zu verstehen.

Die Geschwindigkeit der Reaktion zwischen Isocyanatgruppen und Verbindungen mit gegenüber NCO-Gruppen reaktionsfähigen Wasserstoffatomen wird außer von der Temperatur der Ausgangsprodukte und ihrer Struktur vor allem durch geeignete Katalysatoren beeinflußt. In der Praxis werden als nucleophile Katalysatoren hauptsächlich Basen (z.B. tertiäre Amine wie Triethylamin) und als elektrophile Katalysatoren organische Metallverbindungen (z.B. Sn-Carboxylate wie Sn(II)-octoat) eingesetzt. Stand der Technik ist die gemeinsame Verwendung von Lewis-Säuren und Lewis-Basen, die üblicherweise durch synergistische Effekte gekennzeichnet ist. Es ist jedoch auch bekannt, daß in einer Vielzahl von Anwendungen ausschließlich Amine als Katalysatoren eingesetzt werden. Von der großen Anzahl bekannter Amin-katalysatoren (vgl. Ullmann, 4. AUfl. und Kunststoffhandbuch Band VII, Polyurethane, Hansen-Verlag, München 1983) haben bisher jedoch nur relativ wenige auf breiter Basis Eingang in die Technik gewonnen, wie z.B. 1,4-Diazabicyclo[2.2.2]octan (DABCO), Bis-(2-dimethylaminoethyl)ether, Triethylamin, Dimethylcyclohexylamin, Dimethylethanolamin, Dimethylbenzylamin, Methylmorpholin, Ethylmorpholin, um die wichtigsten zu nennen. Insbesondere werden naturgemäß solche Katalysatoren verwendet, die sich durch hohe Aktivität, wirtschaftliche Herstellbarkeit sowie breite Anwendbarkeit auszeichnen. Ein weiterer ständig an Bedeutung zunehmender Aspekt ist die Bewertung der Katalysatoren unter toxikologischen Gesichtspunkten hinsichtlich Verarbeitungssicherheit und Geruchsbelästigung. Viele der heute verwendeten AminKatalysatoren, wie z.B. DABCO oder Triethylamin, sind aus dieser Sicht aufgrund ihrer hohen Flüchtigkeit und ihres relativ intensiven Amingeruchs, welcher in das endgültige, damit hergestellte Produkt übertragen wird, als unbefriedigend zu bezeichnen.

Aminkatalysatoren mit einer zusätzlichen, isocyanatreaktiven Gruppe der allgemeinen Struktur

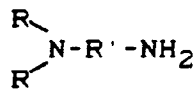

sind in der DE-A 2 116 535 (entspricht der FR 2085965) beschrieben. Dort werden u.a. auch solche Verbindungen genannt, bei denen die beiden Reste R unter Bildung von 3- bis 6-gliedrigen Ringen miteinander verknüpft sind. Aus dieser speziellen Verbindungsklasse ist ein Vertreter, das N-(2-Aminoethyl)-aziridin, mit Beispielen belegt (Bsp. 10, 16-18). Diese Verbindung erweist sich in den genannten Beispielen sowohl hinsichtlich der Dichte, Festigkeit und Elastizität der hergestellten Schäume (Bsp. 10) als auch besonders hinsichtlich der Aktivität (Bsp. 16-18) als deutlich schlechter als die entsprechenden acyclischen Vertreter. Die Verbindung N-(3-Aminopropyl)-pyrrolidin wird mit in der Beschreibung erwähnt.

Überraschenderweise wurde nun gefunden, daß bestimmte Pyrrolidinderivate mit Vorteil als Katalysatoren zur Herstellung von Polyurethanen verwendet werden können. Die erfindungsgemäß zu verwendenden Verbindungen besitzen im Vergleich zu dem oben erwähnten N-(2-Aminoethyl)-aziridin sowie solchen cyclischen Vertretern, die nicht 5-gliedrige Ringe bilden eine wesentlich höhere Aktivität, die sogar die der acyclischen Vertreter in obengenannter Patentschrift übertrifft. Vorteilhaft ist weiterhin der geringe Eigengeruch sowie die geringe Flüchtigkeit der Verbindungen, deren isocyanatreaktive Gruppen in das Polymer eingebunden werden, was zu einer deutlich verminderten Geruchsbelästigung bei der Herstellung von Polyurethanprodukten führt. Zusätzlich können weitere Vorteile beobachtet werden, wie z.B. leichte Handhabung, da die bevorzugt eingesetzten Pyrrolidine flüssig sind, ein guter Härtungsverlauf sowie nicht zuletzt die sehr einfache Herstellung der Verbindungen.

Gegenstand der vorliegenden Erfindung ist somit die Verwendung von N-(aminoalkyl)-pyrrolidinen der allgemeinen Formel (I)

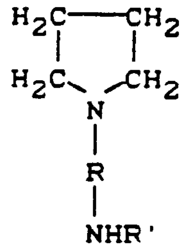

(I)

wobei

R eine gegebenenfalls O- oder N-Atome enthaltende $C_2$-bis $C_{12}$-Alkylengruppe ohne isocyanatreaktive Gruppen und

R′ Wasserstoff oder eine $C_1$- bis $C_4$-Alkylgruppe bedeuten,

mit Aüsnahme des N-(3-Aminopropyl)-pyrrolidins, als Katalysatoren für das Polyisocyanatpolyadditionsverfahren.

Bevorzugte Verbindungen sind dabei Katalysatoren nach obengenannter Formel (I), wobei

R eine 1,3-Propylengruppe und

R′ eine $C_1$- bis $C_4$-Alkylgruppe bedeuten.

Erfindungsgemäße Katalysatoren sind z.B. N-(2-Aminoethyl)-pyrrolidin, N-(2-(Methylamino)-ethyl)-pyrrolidin, N-(3-Methylamino)-propyl)-pyrrolidin, N-(3-(Ethylamino)-propyl)-pyrrolidin, N-(3-(Propylamino)-propyl)-pyrrolidin, N-(4-Aminobutyl)-pyrrolidin, N-(3-Amino-2-methylpropyl)-pyrrolidin oder N-(3-Methylamino-2-methyl-propyl)-pyrrolidin.

Bevorzugte Katalysatoren sind z.B. N-(3-Methylamino)-propyl)-pyrrolidin, N-(3-(Ethylamino)-propyl)-pyrrolidin oder N-(3-(Propylamino)-propyl)-pyrrolidin.

Besonders bevorzugt ist N-(3-(Methylamino)-propyl)-pyrrolidin.

Gegenstand der Erfindung ist auch ein Verfahren zur Herstellung von gegebenenfalls zellförmigen Kunststoffen nach dem Polyisocyanatpolyadditionsverfahren durch Umsetzung von

a) Polyisocyanaten mit

b) höhermolekularen Verbindungen mit mindestens zwei gegenüber Isocyanaten reaktionsfähigen Wasserstoffatomen, unter Verwendung

c) Katalysatoren

d) Kettenverlängerungsmitteln und

e) weiteren an sich bekannten Zusatzmitteln wie Treibmitteln, Stabilisatoren und andere,

das dadurch gekennzeichnet ist, daß als Katalysatoren Verbindungen der obengenannten Formel (I), gegebenenfalls in Kombination mit anderen herkömmlichen Katalysatoren der Polyurethanchemie eingesetzt werden.

Die erfindungsgemäßen Katalysatoren sind an sich bekannte Verbindungen. Die bevorzugten Katalysatoren werden z.B. durch Addition von Pyrrolidin an Acrylnitril, Reduktion und gegebenenfalls anschließender Alkylierung nach bekannten Verfahren hergestellt.

Die neuen erfindungsgemäßen Katalysatoren sind farblose bis leicht gelbliche Verbindungen, wobei die bevorzugten Typen flüssig sind. Sie sind löslich in organischen Lösungsmitteln und löslich oder dispergierbar in Wasser. Die Menge an diesen Verbindungen, welche als Katalysatoren verwendet werden, beträgt im allgemeinen zwischen 0,01 und 5 Gew.-%, bezogen auf die Verbindung mit den aktiven Wasserstoffatomen. Es kann zwar mehr als die obengenannte Menge eingesetzt werden, was jedoch keinen Vorteil bringt.

Die aktive Wasserstoffatome besitzenden Verbindungen, welche beim erfindungsgemäßen Verfahren als Komponente B verwendet werden, sind solche, welche bei den früher bekannten Verfahren zur Polyurethan-Herstellung verwendet worden sind und wie sie z,B, im Kunststoffhandbuch Band VII, Polyurethane, Hansen-Verlag, München 1983 oder im Houben-Weyl, Makromolekulare Stoffe, Band E20 beschrieben werden. Sie weisen vorzugsweise ein Molekulargewicht von 3.000 bis 10.000, besonders bevorzugt 3.000 bis 6.000 auf. Beispiele sind Polyetherpolyole wie Bayfit® 3973 oder Bayfit® 3963 der Bayer AG.

Die erfindungsgemäß verwendeten Verbindungen mit NCO-Gruppen; Komponente A, sind die gleichen Verbindungen, welche bei bisher bekannten Verfahren eingesetzt wurden und wie sie z.B. im Kunststoffhandbuch Band VII, Polyurethane, Hansen-Verlag, München 1983 oder im Houben-Weyl, Makromolekulare Stoffe, Band E20 beschrieben werden.

Bei dem erfindungsgemäßen Verfahren werden die substituierten Pyrrolidine in der gleichen Art verwendet, wie man die früheren Katalysatoren eingesetzt hat, z.B. kann der Katalysator in seiner flüssigen Form an sich verwendet werden, oder durch Auflösen in einem Polyol oder einem passenden Lösungsmittel; er kann unter jeglicher Temperatur - oder anderen Bedingungen - entweder allein oder in Kombination anderer in der

Technik bekannter Katalysatoren, welche auch brauchbar zur Herstellung von Polyurethanen bekannt sind eingesetzt werden: beispielsweise organischen oder anorganische Zinnverbindungen oder anderen metallorganischen Verbindungen; tertiären Aminen; Alkanolaminen; cyclischen Aminen, Polyaminen und dergleichen; Alkalimetallverbindungen und anderer Co-Katalysatoren.

Bevorzugt werden die Verbindungen gemäß erfindungsgemäßer Verwendung in einer Menge von mindestens 50 Gew.-%, bezogen auf die insgesamt eingesetzte Katalysatormenge eingesetzt.

Das erfindungsgemäße Verfahren ist für die herkömmlichen Herstellungsmethoden, wie z.B. One-Shot- oder Prepolymerverfahren zur Herstellung von Polyurethanschäumen, Polyurethanelastomeren, Polyurethanüberzügen und dergleichen geeignet, ebenso wie für die Vernetzungsreaktion, welche oft im Anschluß an die direkte Polyaddition erwünscht ist.

Alle anderen Bedingungen sind die gleichen wie bei herkömmlichen Urethanpolyadditionsverfahren. In jedem dieser Fälle können weitere Zusatzmittel, wie Kettenverlängerungsmittel, Treibmittel, Schaumstabilisatoren, Emulgatoren, Farben, Pigmente und Füllstoffe der an sich bekannten Art mitverwendet werden.

Die oben erwähnten erfindungsgemäßen Katalysatoren beschleunigen die Polyaddition in beträchtlichem Ausmaß und demnach ist die benötigte Katalysatormenge sehr gering. Da die erfindungsgemäßen Verbindungen nur einen geringen Geruch besitzen und da sie wenig flüchtige Flüssigkeiten und einbaubare Verbindungen darstellen, sind die erhaltenen Polyurethan-Produkte frei von unerwünschten Gerüchen.

Die nachfolgenden Beispiele erläutern die Erfindung weiter, ohne sie zu beschränken. Teile und Verhältnisse sind in allen Fällen als Gewichtsteile gemeint.

## Beispiele

### Beispiele 1 bis 6

In diesen Beispielen wird die hohe katalytische Aktivität des N-(3-Methylamino)-propyl)-pyrrolidins im Vergleich zu analogen Katalysatoren, die keinen Pyrrolidinring enthalten, in einem PUR-Kaltweichformschaumsystem gezeigt.

Dabei wurden folgende Katalysatoren verwendet:

Katalysator 1: N-(3-Aminopropyl)-piperidin
Katalysator 2: N-(3-Aminopropyl)-N'-methyl-piperazin
Katalysator 3: 3-Dimethylamino-propylamin
Katalysator 4: N-(3-(Methylamino)-propyl)-pyrrolidin

Katalysator 4 ist erfindungsgemäß, die anderen dienen zum Vergleich.

A-Komponente:

37,10 Teile eines Gemisches aus 80 % 2,4-Toluylendiisocyanat und 2,6-Toluylendiisocyanat (im Verhältnis 80:20) und 20 % 4,4'-Diisocyanatodiphenylmethan mit polymeren Anteilen mit einem NCO-Gehalt von 44,5 ± 0,5 Gew.-%; Desmodur® VT 06, ein Handelsprodukt der Fa. Bayer AG

B-Komponente:

100,00 Teile eines Polyetherpolyols der OH-Zahl 28 ± 2 mg KOH/g hergestellt durch Umsetzung von Trimethylolpropan (TMP) mit Propylenoxid (PO) und anschließende Umsetzung mit Ethylenoxid (EO) mit einem PO/EO-Verhältnis von 82/18
3,00 Teile Wasser
0,05 Teile einer 70 %igen Lösung von Bis-(2-dimethylaminoethyl)ether in Dipropylenglykol (DPG)
0,25 Teile einer 33 %igen Lösung von Diazabicyclo[2.2.2]octan (DABCO) in DPG
0,20 Teile Schaumstabilisator B4617 der Fa. Goldschmidt AG
0,80 Teile eines Polyetherpolysiloxans als Stabilisator;
Stabilisator IS 50 der Fa. Bayer AG
0,6 Teile des betreffenden Katalysators 1 bis 4.

Die A-Komponente wird mit der B-Komponente vereinigt und mit einem Schnellrührer 6 sec. gründlich vermischt, Anschließend wird das Reaktionsgemisch bei Raumtemperatur in einer offenen Form verschäumt.

In Tabelle 1 sind die Ergebnisse bei Verwendung der verschiedenen Katalysatoren zusammengefaßt.

Tabelle 1

| Beispiel | Katalysator * | Startzeit (sec) | Abbindezeit (sec) | Steigzeit (sec) |
|---|---|---|---|---|
| 1 | ohne | 9 | 108 | 213 |
| 2 | 1 | 9 | 105 | 210 |
| 3 | 2 | 8 | 75 | 150 |
| 4 | 3 | 7 | 52 | 115 |
| 5** | 4 | 4-5 | 46 | 93 |

* Formel siehe nachfolgend
** erfindungsgemäß

Man erhält Schäume mit einwandfreier Schaumstruktur.

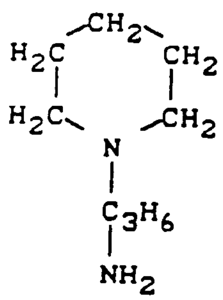
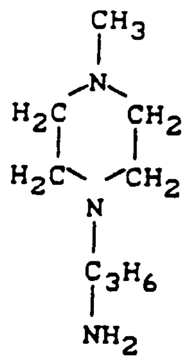
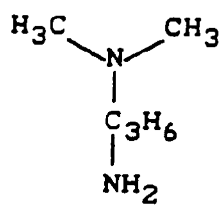
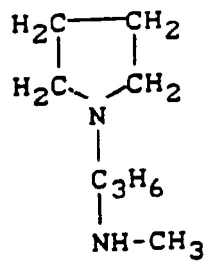

Katalysator

1 2 3 4

## Patentansprüche

1. Verwendung von N-(Aminoalkyl)-pyrrolidinen der allgemeinen Formel (I)

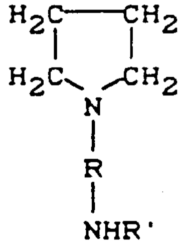
(I)

wobei

R eine gegebenenfalls O- oder N-Atome enthaltende $C_2$-bis $C_{12}$-Alkylengruppe ohne isocyanatreaktive Gruppen und

R′ Wasserstoff oder eine $C_1$- bis $C_4$-Alkylgruppe bedeuten,

mit Ausnahme des N-(3-Aminopropyl)-pyrrolidins als Katalysatoren für das Polyisocyanatpolyadditionsverfahren.

2. Verwendung nach Anspruch 1, dadurch gekennzeichnet daß

R eine 1,3-Propylengruppe und

R′ eine $C_1$- bis $C_4$-Alkylgruppe ist.

3. Verwendung von N-(3-(Methylamino)-propyl)-pyrrolidin nach Anspruch 1.

4. Verfahren zur Herstellung von gegebenenfalls zellförmigen Kunststoffen nach dem Polyisocyanatpolyadditionsverfahren durch Umsetzung von

a) Polyisocyanaten mit

b) höhermolekularen Verbindungen mit mindestens zwei gegenüber Isocyanaten reaktionsfähigen Wasserstoffatomen, unter Verwendung von

c) Katalysatoren sowie gegebenenfalls

d) Kettenverlängerungsmitteln und

e) weiteren an sich bekannten Zusatzmitteln wie Treibmitteln, Stabilisatoren und andere

dadurch gekennzeichnet, daß als Katalysatoren Verbindungen gemäß Verwendung nach einem der Ansprüche 1 bis 3 gegebenenfalls in Kombination mit anderen herkömmlichen Katalysatoren der Polyurethanchemie eingesetzt werden,

## Claims

1. The use of N-(aminoalkyl)-pyrrolidines corresponding to general formula (I)

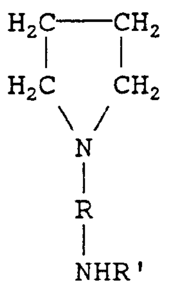

(I)

in which

R is a $C_{2-12}$ alkylene group optionally containing O or N atoms, but no isocyanate-reactive groups and

R′ is hydrogen or a $C_{1-4}$ alkyl group,

with the exception of N-(3-aminopropyl)-pyrrolidine as catalysts for the polyisocyanate polyaddition process.

2. The use claimed in claim 1, characterized in that

R is a 1,3-propylene group and

R′ is a $C_{1-4}$ alkyl group.

3. The use of N-(3-(methylamino)-propyl)-pyrrolidine claimed in claim 1.

4. A process for the production of optionally cellular plastics by the polyisocyanate polyaddition process by reaction of

a) polyisocyanates with

b) relatively high molecular weight compounds containing at least two isocyanate-reactive hydrogen atoms using

c) catalysts,
d) chain-extending agents and
e) other additives known per se, such as blowing agents, stabilizers and others,
characterized in that compounds intended for the use claimed in any of claims 1 to 3, optionally in combination with other conventional catalysts of polyurethane chemistry, are used as the catalysts.

## Revendications

1. Utilisation de N-(aminoalkyl)-pyrrolidines de formule générale I :

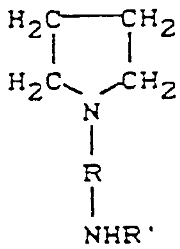

(I)

dans laquelle
R représente un groupe alkylène en $C_2$-$C_{12}$ contenant éventuellement des atomes d'oxygène ou d'azote mais sans groupe réactif avec les isocyanates et
R′ représente l'hydrogène ou un groupe alkyle en $C_1$-$C_4$,
à l'exception de la N-(3-aminopropyl)-pyrrolidine,
en tant que catalyseurs pour le procédé de polyaddition des polyisocyanates.

2. Utilisation selon revendication 1, caractérisée en ce que :
R représente un groupe 1,3-propylène et
R′ un groupe alkyle en $C_1$-$C_4$.

3. Utilisation de la N-[3-(méthylamino)-propyl]-pyrrolidine selon revendication 1.

4. Procédé de préparation de résines synthétiques éventuellement alvéolaires par le procédé de polyaddition des polyisocyanates, par réaction de :
a) des polyisocyanates avec
b) des composés à haut poids moléculaire contenant au moins deux atomes d'hydrogène réactifs avec les isocyanates, avec utilisation de :
c) des catalyseurs, et le cas échéant
d) des agents d'allongement des chaînes et
e) d'autres additifs connus en soi tels que des agents porogènes, des stabilisants et d'autres encore,
caractérisé en ce que l'on utilise en tant que catalyseurs des composés selon l'utilisation de l'une des revendications 1 à 3, éventuellement en combinaison avec d'autres catalyseurs connus de la chimie des polyuréthannes.